# EUROPÄISCHE PATENTSCHRIFT

(11) **EP 3 142 905 B1**
(45) Veröffentlichungstag und Bekanntmachung des Hinweises auf die Patenterteilung: **24.10.2018**
(21) Anmeldenummer: 15722515.2
(22) Anmeldetag: 08.05.2015
(51) Int. Cl.: B60T 7/12, B60T 8/40

(54) **BREMSANLAGE FÜR KRAFTFAHRZEUGE**
BRAKE SYSTEM FOR MOTOR VEHICLES
SYSTÈME DE FREINAGE POUR VÉHICULES AUTOMOBILES

(30) Priorität: 15.05.2014 DE 102014209270; 13.04.2015 DE 102015206572
(43) Veröffentlichungstag der Anmeldung: 22.03.2017
(73) Patentinhaber: Continental Teves AG & Co. OHG, 60488 Frankfurt am Main (DE)
(72) Erfinder: BESIER, Marco, 65307 Bad Schwalbach (DE); DRUMM, Stefan, 55291 Saulheim (DE)
(86) Internationale Anmeldenummer: PCT/EP2015/060167
(87) Internationale Veröffentlichungsnummer: WO 2015/173134

(56) Entgegenhaltungen:
- WO-A1-00/68056
- WO-A1-98/49038
- WO-A1-2012/049134
- WO-A1-2012/150120
- WO-A1-2014/016601
- DE-A1-102009 046 234
- DE-A1-102013 017 688

## Beschreibung

Die Erfindung betrifft eine Bremsanlage für Kraftfahrzeuge gemäß Oberbegriff von Anspruch 1.

Es sind hydraulische Fahrzeugbremsanlagen bekannt, welche als Fremdkraftbremsanlagen ausgebildet sind und neben einem muskelkraftbetätigbaren Hauptbremszylinder, an den Radbremsen hydraulisch angeschlossen sind und der Druck und Volumen zum Betätigen von Radbremsen bereitstellt, eine weitere, elektrisch steuerbare Druck- und Volumenbereitstellungseinrichtung umfassen, die in einer "Brake-by-wire"-Betriebsart die Radbremsen ansteuert. Bei Ausfall der elektrisch steuerbaren Druck- und Volumenbereitstellungseinrichtung erfolgt eine Betätigung der Radbremsen allein durch die Muskelkraft des Fahrzeugführers.

So ist beispielsweise aus der WO 2011/029812 A1 eine elektrohydraulische Bremsanlage mit einem bremspedalbetätigbaren Hauptbremszylinder, einem Wegsimulator und einer elektrisch steuerbaren Druckbereitstellungseinrichtung bekannt. Die Radbremsen werden in einer "Brake-by-wire"-Betriebsart durch die Druckbereitstellungseinrichtung mit Druck beaufschlagt. In einer Rückfallbetriebsart werden die Radbremsen mittels des Bremspedal betätigbaren Hauptbremszylinders mit dem durch den Fahrer aufgebrachten Druck beaufschlagt. Als nachteilig wird bei der Bremsanlage empfunden, dass bei einem Ausfall der Ansteuerung oder des Antriebs der Druckbereitstellungseinrichtung eine Betätigung der Radbremsen nur durch den Fahrer möglich ist.

In der WO 2012/150120 A1 wird daher eine elektrohydraulische "Brake-by-wire"-Bremsanlage mit einem bremspedalbetätigbaren Hauptbremszylinder, einer ersten elektrisch steuerbaren Druckbereitstellungseinrichtung und einer zweiten elektrisch steuerbaren Druckbereitstellungseinrichtung beschrieben. Mittels der zweiten Druckbereitstellungseinrichtung ist eine Druck- und Volumenverstärkung der vom Fahrzeugführer aufgebrachten Bremspedalbetätigung durchführbar, wenn die erste Druckbereitstellungseinrichtung ausfällt.

Kraftfahrzeuge werden in zunehmendem Maße mit einer Umfeldsensorik ausgestattet, anhand deren ein Umfeldsteuergerät eine Solltrajektorie für das Fahrzeug ermitteln und Antrieb, Bremssystem sowie Lenkung des Fahrzeugs fahrerunabhängig ansteuern kann. Ziel hierbei ist ein automatisiertes Fahren, bei dem das Fahrzeug unabhängig von Lenk-, Antriebs- oder Bremsvorgaben des Fahrers selbständig manövriert. Hierbei ist eine Erhöhung der Betriebssicherheit, insbesondere der Bremsanlage, auch beim Auftreten von Fehlern erforderlich.

Es ist daher Aufgabe der vorliegenden Erfindung, eine Bremsanlage bereitzustellen, welche für automatisiertes Fahren geeignet ist und insbesondere die hierfür erforderlichen Sicherheitsanforderungen bezüglich der Verfügbarkeit der Bremsfunktion, auch bei einem Auftreten eines Fehlers, wie einem Defekt einer elektrisch steuerbaren Druckquelle oder einer unterbrochenen elektrischen Verbindung, erfüllt.

Diese Aufgabe wird durch eine Bremsanlage gemäß Anspruch 1 gelöst.

Der Erfindung liegt der Gedanke zugrunde, für eine fremdangesteuerte Bremsung auf Anforderung durch ein Umfeldsteuergerät mindestens zwei unabhängige Wirkpfade vorzusehen. Hierzu sind die Wirkpfade je mit einer Sensorik zur Erfassung einer Bremsbetätigung, einer elektrisch steuerbaren Druckquelle, einer elektronischen Steuereinheit sowie einer Schnittstelle zur Anforderung einer fremdangesteuerten Bremsung ausgestattet, wobei die Schnittstelle der ersten elektronischen Steuereinheit und die Schnittstelle der zweiten elektronischen Steuereinheit nicht miteinander verbunden, also unabhängig, sind. Die erste elektronische Steuereinheit ist allerdings zusätzlich über eine weitere Datenverbindung mit der zweiten elektronischen Steuereinheit verbunden.

Erfindungsgemäß sind eine elektrisch steuerbare Druckquelle, eine elektronischen Steuereinheit und ein Bremsbetätigungssensor mindestens zweifach ausgeführt. Zur weiteren Erhöhung der Zuverlässigkeit sind die genannten Komponenten bevorzugt dreifach ausgeführt.

Dadurch, dass die erste elektronische Steuereinheit eine erste Schnittstelle aufweist und die zweite elektronische Steuereinheit eine zweite Schnittstelle aufweist, kann die Kommunikation mit einem Autopiloten bzw. einem Umfeldsteuergerät ebenfalls auf redundanten Kanälen erfolgen.

Ein Vorteil der erfindungsgemäßen Bremsanlage liegt darin, dass auch bei Auftreten eines Fehlers in der Bremsanlage eine Bremsung ohne Beteiligung des Fahrers gewährleistet ist.

Bevorzugt werden über die erste Schnittstelle Daten von einem Umfeldsteuergerät empfangen oder an das Umfeldsteuergerät gesendet und über die zweite Schnittstelle Daten von einem Umfeldsteuergerät empfangen oder an das Umfeldsteuergerät gesendet.

Die erste Schnittstelle ist über einen ersten Datenbus mit einer ersten Schnittstelle eines Umfeldsteuergeräts verbunden und die zweite Schnittstelle ist über einen zweiten, d.h. vom ersten Datenbus unabhängigen, Datenbus mit einer zweiten Schnittstelle des Umfeldsteuergeräts verbunden. Somit ist eine zuverlässige Verbindung auch dann gewährleistet, wenn einer der Datenbusse gestört ist.

Alternativ ist die erste Schnittstelle über einen ersten Datenbus mit einer Schnittstelle eines ersten Umfeldsteuergeräts verbunden und die zweite Schnittstelle über einen zweiten, d.h. vom ersten Datenbus unabhängigen, Datenbus mit einer Schnittstelle eines zweiten Umfeldsteuergeräts verbunden. Somit ist eine zuverlässige Verbindung auch dann gewährleistet, wenn einer der Datenbusse gestört ist.

Ein Umfeldsteuergerät kann auch durch eine Gruppe von Steuergeräten gebildet werden, welche zusammen bzw. gemeinschaftlich die "Autopilot-Funktion" darstellen, d.h. eine fremdangesteuerte Bremsung anfordern können.

Für ein automatisiertes Fahren wertet das Umfeldsteuergerät bevorzugt die Signale von Radar-, Lidar- und/oder Ultraschallsensoren sowie zweckmäßigerweise ein oder mehrerer Kameras aus, um eine Sollbewegung des Fahrzeugs ermitteln.

Bevorzugt ist ein Umfeldsteuergerät als kernredundanter Mikrocontroller mit zwei unabhängigen Schnittstellen zu Datenbussen ausgeführt.

Bevorzugt sind der erste und der zweite Bremsbetätigungssensor als ein redundanter Bremsbetätigungssensor ausgeführt und in einer Baueinheit integriert. Besonders bevorzugt handelt es sich bei dem ersten Bremsbetätigungssensor um einen Betätigungswegsensor oder einen Betätigungskraftsensor. Besonders bevorzugt handelt es sich bei dem zweiten Bremsbetätigungssensor um einen Betätigungswegsensor oder einen Betätigungskraftsensor.

Da eine Unterbrechung einer elektrischen Energieversorgung ein relativ häufiger auftretender Fehler ist, wird zur Erhöhung der Verfügbarkeit der autonomen Bremsfunktion die Bremsanlage bevorzugt aus zwei voneinander unabhängigen elektrischen Energiequellen versorgt. Hierzu sind die erste elektronische Steuereinheit und die erste Druckquelle mit einer ersten elektrischen Energiequelle verbunden sowie die zweite elektronische Steuereinheit und die zweite Druckquelle mit einer zweiten elektrischen Energiequelle verbunden.

Bevorzugt ist die hydraulische Steuervorrichtung in eine erste hydraulische Steuereinheit und eine zweite hydraulische Steuereinheit aufgeteilt, wobei die ersten Druckquelle in der ersten hydraulischen Steuereinheit und die zweite Druckquelle in der zweiten hydraulischen Steuereinheit angeordnet sind. Besonders bevorzugt sind das mindestens eine erste Magnetventil, welches zwischen Radbremsen und erster Druckquelle angeordnet ist, sowie das mindestens eine zweite Magnetventil, welches zwischen Radbremsen und zweiter Druckquelle angeordnet ist, in der ersten hydraulischen Steuereinheit angeordnet.

Bevorzugt umfasst die Bremsanlage eine dritte elektrisch steuerbare Druckquelle, welche von der ersten oder der zweiten elektronischen Steuereinheit angesteuert wird.

Bevorzugt umfasst die Bremsanlage eine dritte elektronische Steuereinheit und eine dritte elektrisch steuerbare Druckquelle, welche von der dritten elektronischen Steuereinheit angesteuert wird.

Bevorzugt ist eine dritte elektrische Energiequelle vorgesehen, welche die dritte elektronische Steuereinheit und/oder die dritte Druckquelle versorgt.

Bevorzugt übermittelt die erste Steuereinheit über die Datenleitung (die dritte Datenverbindung) der zweiten Steueeinheit ein Bestätigungssignal bezüglich der Möglichkeit eines Druckaufbaus oder Druckabbaus mittels der ersten Druckquelle. Im Falle, dass die erste Druckquelle oder deren Ansteuerung fehlerhaft ist oder eine Stromversorgung der ersten Druckquelle oder der hydraulischen Steuervorrichtung nicht möglich ist, ist es anhand eines ausbleibenden Bestätigungssignal für die zweite Steuereinheit erkennbar, dass gegebenenfalls eine Druckbeaufschlagung oder Verstärkung mittels der zweiten Druckquelle notwendig ist.

Bevorzugt ist zumindest die elektronische Steuereinheit dreifach ausgeführt oder die Recheneinheiten zumindest einer der elektronischen Steuereinheiten sind dreifach ausgeführt. Durch die Dreifachredundanz kann ein Vergleich der Ergebnisse vorgenommen werden und somit die Ansteuerung der entsprechenden Druckquelle bzw. der Druckquellen anhand einer Mehrheitsentscheidung vorgenommen werden.

Bevorzugt umfasst die Bremsanlage eine dritte elektronische Steuereinheit, welche die erste und/oder die zweite Druckquelle ansteuern kann. Besonders bevorzugt weist die dritte elektronische Steuereinheit eine dritte Schnittstelle zur Anforderung einer fremdangesteuerten Bremsung auf.

Als zusätzliche, unabhängige Möglichkeit für eine Bremsung oder zur Unterstützung einer Bremsung umfasst die Bremsanlage bevorzugt eine elektrisch betätigbare Feststellbremse, welche mittels der zweiten elektronischen Steuereinheit elektrisch steuerbar ist. So kann die von der zweiten elektronischen Steuereinheit angesteuerte zweite Druckquelle kleiner dimensioniert oder weniger sicher ausgelegt werden, da notfalls eine Unterstützung der Bremsung mittels der elektrisch betätigbaren Feststellbremse durch die zweiten elektronischen Steuereinheit möglich ist.

Bevorzugt umfasst die Bremsanlage einen Feststellbremsbetätigungsschalter, welcher über eine erste Signal- oder Datenverbindung mit der ersten elektronischen Steuereinheit und über eine zweite Signal- oder Datenverbindung mit der zweiten elektronischen Steuereinheit verbunden ist. So kann auch bei einem Ausfall einer der elektronischen Steuereinheiten das Fahrzeug auf Wunsch des Fahrers sich abgestellt werden.

Gemäß einer bevorzugten Ausführungsform der erfindungsgemäßen Bremsanlage umfasst diese als zweite Magnetventile ein Zuschaltventil je Bremskreis zur hydraulischen Verbindung der ersten Druckquelle mit dem Bremskreis. Das Zuschaltventil ist jeweils besonders bevorzugt in einer hydraulischen Verbindungsleitung zwischen der ersten Druckquelle und dem Bremskreis bzw. der Bremskreisversorgungsleitung angeordnet und ermöglicht so ein wahlweises Öffnen oder Verschließen der hydraulischen Verbindung zwischen erster Druckquelle und Bremskreis . Besonders bevorzugt sind die Zuschaltventile stromlos geschlossen ausgeführt, damit der Bremskreis in einer stromlosen Rückfallbetriebsart hydraulisch von der ersten Druckquelle getrennt ist.

Gemäß einer bevorzugten Ausführungsform der erfindungsgemäßen Bremsanlage umfasst diese als erste Magnetventile ein Trennventil je Bremskreis. Das Trennventil ist jeweils besonders bevorzugt in einer hydraulischen Verbindungsleitung zwischen einem bremspedalbetätigbaren Hauptbremszylinder und dem Bremskreis bzw. der Bremskreisversorgungsleitung angeordnet und ermöglicht so ein wahlweises Verschließen oder Öffnen der hydraulischen Verbindung zwischen Hauptbremszylinder und Bremskreis. Die Trennventile sind besonders bevorzugt stromlos offen ausgeführt, damit die Bremskreise in einer Rückfallbetriebsart hydraulisch mit dem Hauptbremszylinder verbunden sind und so vom Fahrzeugführer mit Druck beaufschlagt werden können.

Es ist bevorzugt, dass für jeden Bremskreis ein Ausgangsanschluss des Trennventils und ein Ausgangsanschluss des Zuschaltventils hydraulisch verbunden sind. Die hydraulische Verbindung umfasst besonders bevorzugt die Bremskreisversorgungsleitung.

Die zweite Druckquelle ist bevorzugt als eine elektrisch steuerbare Druckbereitstellungseinrichtung ausgebildet, welche einen Sauganschluss und einen Druckanschluss je Bremskreis umfasst. Dabei ist je Bremskreis der Druckanschluss mit einem Eingangsanschluss (d.h. einem den Radbremsen abgewandten Anschluss) des dem Bremskreis zugeordneten Trennventils verbunden ist. D.h. die zweite Druckquelle ist vor den Trennventilen (eingangsseitig der Trennventile) angeordnet.

Zur Regelung des durch die zweite Druckquelle bereitgestellten Druckes ist bevorzugt je Bremskreis ein Drucksensor vorgesehen, welcher den Druck an dem Druckanschluss der zweiten Druckquelle erfasst.

Bevorzugt sind die zweite Druckquelle und die zweite elektronische Steuereinheit zur Ansteuerung der zweiten Druckquelle in einer eigenständigen Baugruppe, einem elektrohydraulischen Modul, angeordnet. Dies ermöglicht kostengünstig eine Herstellung der Bremsanlage wahlweise mit oder ohne zweite Druckquelle. Besonders bevorzugt umfasst die eigenständige Baugruppe auch der zweiten Druckquelle zugeordneten Regelventile.

Bevorzugt umfasst die Bremsanlage eine Simulationseinrichtung, die in der "Brake-by-wire"-Betriebsart dem Fahrzeugführer das gewohnte Bremspedalgefühl vermittelt. Besonders bevorzugt steht die Simulationseinrichtung mit einem der Druckräume des Hauptbremszylinders in hydraulischer Verbindung. Besonders bevorzugt ist die Wirkung der Simulationseinrichtung mittels eines Simulatorfreigabeventils zu- und abschaltbar.

Bevorzugt umfasst die Bremsanlage ein elektrisch betätigbares, vorteilhafterweise stromlos offenes, Einlassventil und ein elektrisch betätigbares, vorteilhafterweise stromlos geschlossenes, Auslassventil je Radbremse zum Einstellen radindividueller Bremsdrücke.

Die Einlassventile und Auslassventile werden bevorzugt von der ersten elektronischen Steuereinheit angesteuert.

Die erste elektronische Steuereinheit ist bevorzugt zur Ansteuerung der ersten elektrisch steuerbaren Druckquelle im Sinne einer Regelung oder Steuerung des von ihr abgegebenen hydraulischen Druckes ausgebildet. Weiterhin werden durch die erste elektronische Steuereinheit vorteilhafterweise das zumindest eine erste Magnetventil zwischen Radbremsen und erster Druckquelle, insbesondere die Trennventile, und das zumindest eine zweite Magnetventil zwischen Radbremsen und zweiter Druckquelle, insbesondere die Zuschaltventile, und ggf ein Simulatorfreigabeventil, der Bremsanlage geregelt bzw. gesteuert.

Die zweite elektronische Steuereinheit ist bevorzugt zur Ansteuerung der zweiten elektrisch steuerbaren Druckquelle im Sinne einer Regelung oder Steuerung des von ihr abgegebenen hydraulischen Druckes ausgebildet.

Bevorzugt wird die erste elektrisch steuerbare Druckquelle durch eine Zylinder-Kolben-Anordnung gebildet, deren Kolben durch einen elektromechanischen Aktuator betätigbar ist. Ein solcher elektrohydraulischer Aktuator arbeitet besonders dynamisch, sehr leise und verträgt problemlos die für Bremsanlagen erforderlichen Lastwechselzahlen.

Bevorzugt ist die zweite elektrisch steuerbare Druckquelle als eine zumindest zweikreisige, von einem Elektromotor angetriebene hydraulische Pumpe ausgeführt. Besonders bevorzugt wird eine Regelung des von dem Motor-Pumpen-Aggregat ausgegebenen Druckmittelstroms mittels einer Drehzahlregelung des Motor-Pumpen-Aggregats oder mittels einer Ventilstromregelung eines der Pumpe des Motor-Pumpen-Aggregats parallel geschalteten, analog ansteuerbaren Regelventils durchgeführt.

Weitere bevorzugte Ausführungsformen der Erfindung ergeben sich aus den Unteransprüchen und der nachfolgenden Beschreibung anhand von Figuren.

Es zeigen schematisch
- Fig. 1: ein erstes Ausführungsbeispiel einer erfindungsgemäßen Bremsanlage, und
- Fig. 2: ein zweites Ausführungsbeispiel einer erfindungsgemäßen Bremsanlage.

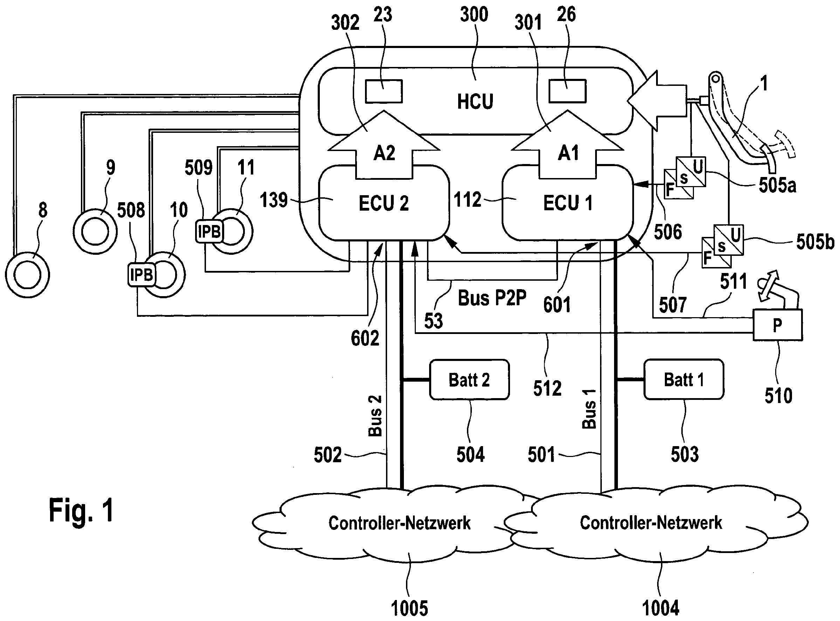

Die in Fig. 1 gezeigte Bremsanlage gemäß einem ersten Ausführungsbeispiel der Erfindung weist vier hydraulisch betätigbare Radbremsen 8, 9, 10, 11 auf, die vorzugsweise in mindestens zwei Bremskreisen angeordnet sind. Der Fahrer kann über Bremspedal 1 eine Bremsung veranlassen. Die Bremsbetätigung wird mit zumindest zwei unabhängigen Bremsbetätigungssensoren 505a und 505b erfasst, die vorteilhafterweise jeweils redundant ausgeführt sind. Beispielsgemäß erfassen die Bremsbetätigungssensoren 505a, 505b die Betätigungskraft oder den Betätigungsweg des Bremspedals 1.

Die beispielsgemäße Bremsanlage weist eine hydraulische Steuervorrichtung in Form einer hydraulischen Steuereinheit (HCU) 300 auf, an die eine erste elektrisch steuerbare Druckquelle (A1) 301 und eine zweite elektrisch steuerbare Druckquelle (A2) 302 angeschlossen sind. Die Druckquellen 301 und 302 können auch Teil der hydraulischen Steuereinheit 300, d.h. in diese integriert, sein. Die Druckquellen 301, 302 können unabhängig voneinander einen Bremsdruckaufbau in den Radbremsen 8-11 bewirken.

Um die Radbremsen 8-11 wahlweise von einer der Druckquellen 301, 302 trennen oder mit einer verbinden zu können, umfasst die hydraulischen Steuervorrichtung 300 bevorzugt mindestens ein erstes elektrisch betätigbares Ventil 26, insbesondere Magnetventil, zwischen Radbremsen 8-11 und erster Druckquelle 301 sowie ein zweites elektrisch betätigbares Ventil 23, insbesondere Magnetventil, zwischen Radbremsen 8-11 und zweiter Druckquelle 302, welche in Fig. 1 schematisch angedeutet sind.

Die erste Druckquelle 301 wird von einer ersten elektronischen Steuereinheit (ECU1) 112 angesteuert, während die zweite Druckquelle 302 von einer zweiten elektronischen Steuereinheit (ECU2) 139 angesteuert wird.

Der erste Bremsbetätigungssensor 505a ist über eine Signal- oder Datenleitung 506 mit der ersten Steuereinheit 112 und der zweite Bremsbetätigungssensor 505b ist über eine Signal- oder Datenleitung 507 mit der zweiten Steuereinheit 139 verbunden.

Es sind zumindest zwei, vorteilhafterweise voneinander unabhängige, elektrische Energiequellen 503, 504, beispielsgemäß in Form von Batterien, zur Versorgung der Bremsanlage mit elektrischer Energie vorgesehen. Dabei ist die erste elektronische Steuereinheit 112 mit der ersten Energiequelle (Batt1) 503 verbunden und die zweite elektronische Steuereinheit 139 mit der zweiten Energiequelle (Batt2) 504 verbunden. Bei der Energieversorgung kann es sich auch um unabhängige Bordnetze bestehend aus Energiespeicher (wie Batterie) und Generator (wie Lichtmaschine) handeln.

Um eine Ansteuerung der Bremsanlage während des automatisierten Fahrens durch ein Umfeldsteuergerät mit einer Autopilot-Funktion zu ermöglichen, ist die Bremsanlage über mindestens zwei unabhängige Kommunikationsverbindungen 501, 502 bzw. Datenbusse (erster Datenbus 501: Bus 1, zweiter Datenbus 502: Bus 2) mit dem Umfeldsteuergerät bzw. mit einem Controller-Netzwerk (controller network), in dem eine Vielzahl von Steuergeräten - darunter auch das Umfeldsteuergerät - eingebunden sind, verbunden. Über das Controller-Netzwerk können die Steuergeräte Informationen austauschen.

Hierbei ist die erste elektronische Steuereinheit 112 beispielsgemäß über eine erste Schnittstelle 601 und den ersten Datenbus 501 mit einer ersten Anzahl 1004 von Steuergeräten verbunden, welche ein (erstes) Umfeldsteuergerät mit Autopilot-Funktion umfasst.

Die zweite elektronische Steuereinheit 139 ist über eine zweite Schnittstelle 602 und den zweiten Datenbus 502 mit einer zweiten Anzahl 1005 von Steuergeräten verbunden, welche ebenfalls das (erste) Umfeldsteuergerät umfasst, d.h. der erste Datenbus 501 und der zweite Datenbus 502 sind mit zwei unabhängigen Schnittstellen desselben Umfeldsteuergeräts verbunden (erste und zweite Schnittstelle des (ersten) Umfeldsteuergeräts). Alternativ ist die zweite elektronische Steuereinheit 139 über eine zweite Schnittstelle 602 und den zweiten Datenbus 502 mit einer zweiten Anzahl 1004 von Steuergeräten verbunden, welche ein weiteres (zweites) Umfeldsteuergerät mit Autopilot-Funktion umfasst.

In beiden Fällen ist jede der Steuereinheiten 112, 139 separat über eine Schnittstelle bzw. Kommunikationsleitung mit einem "Autopiloten" bzw. einem Controller-Netzwerk verbunden.

Das erste und/oder das zweite Umfeldsteuergerät kann jeweils auch durch eine Gruppe von Steuergeräten gebildet werden, welche zusammen bzw. gemeinschaftlich die "Autopilot-Funktion" darstellen, d.h. eine fremdangesteuerte Bremsung anfordern können.

In dem jeweiligen Umfeldsteuergerät wird z.B. eine Solltrajektorie für das Fahrzeug ermittelt und der Antrieb, die Bremsanlage sowie die Lenkung des Fahrzeugs entsprechend, fahrerunabhängig angesteuert.

Weiterhin ist eine Kommunikationsverbindung 53 bzw. ein dritter Datenbus (Bus P2P) zwischen den elektronischen Steuereinheiten 112 und 139 vorgesehen, über welche(n) die elektronischen Steuereinheiten 112, 139 untereinander Informationen und/oder Anforderungen austauschen.

Die Kommunikationsverbindung 53 zwischen den elektronischen Steuereinheiten 112 und 139 in Kombination mit den unabhängigen Anbindungen der ersten und zweiten elektronischen Steuereinheit an das (erste) Umfeldsteuergerät oder die Umfeldsteuergeräte (erstes und zweites Umfeldsteuergerät) über die unabhängigen Schnittstellen 601 und 602 bietet den Vorteil von zwei unabhängigen Anforderungswegen für eine fremdangesteuerte Bremsung. So kann z.B. im Falle eines Ausfalls der ersten Kommunikationsverbindung 501 die erste elektronischen Steuereinheiten 112 dennoch über den "Umweg" der zweiten Kommunikationsverbindung 502 und der dritten Kommunikationsverbindung 53 von einem Umfeldsteuergerät angesteuert werden (bei den oben genannten Ausführungsbeispielen, im ersten Fall über die zweite Schnittstelle des ersten Umfeldsteuergeräts und im zweiten Fall über die (erste) Schnittstelle des zweiten Umfeldsteuergeräts) . Entsprechend kann im Falle eines Ausfalls der zweiten Kommunikationsverbindung 502 die zweite elektronische Steuereinheit 139 über den "Umweg" der ersten Kommunikationsverbindung 501 und der dritten Kommunikationsverbindung 53 von einem Umfeldsteuergerät angesteuert werden (d.h. zusätzlich zu der Ansteuerung der ersten elektronischen Steuereinheiten 112 über den "direkten Weg" der ersten Kommunikationsverbindung 501) . Bei den oben genannten Ausführungsbeispielen wäre dies im ersten und zweiten Fall eine Ansteuerung der zweiten elektronischen Steuereinheit 139 über die erste Schnittstelle des ersten Umfeldsteuergeräts.

Falls eine der Komponenten erste Energiequelle 503, erste elektronische Steuereinheit 112 oder erste Druckquelle 301 nicht betriebsbereit sein sollte, kann der elektronische Autopilot über die Komponenten zweite Energiequelle 504, zweite elektronische Steuereinheit 139 und zweite Druckquelle 249 eine Bremsung bewirken. Und umgekehrt kann, falls eine der Komponenten zweite Energiequelle 504, zweite elektronische Steuereinheit 139 oder zweite Druckquelle 249 nicht betriebsbereit sein sollte, der elektronische Autopilot über die Komponenten erste Energiequelle 503, erste elektronische Steuereinheit 112 und erste Druckquelle 301 eine Bremsung bewirken.

Ferner weist die Bremsanlage eine elektrische Parkbremse (Feststellbremse) auf, die einen ersten elektrisch betätigbaren Aktuator 508 und einen zweiten elektrisch betätigbaren Aktuator 509 umfasst. Beispielsgemäß sind die Aktuatoren 508, 509 der elektrischen Parkbremse den Radbremsen 10 und 11 zugeordnet. Über einen Parkbremsbetätigungsschalter 510 kann der Fahrer die elektrische Parkbremse betätigen. Parkbremsbetätigungsschalter 510 ist über eine erste Signal- oder Datenverbindung 511 mit der ersten Steuereinheit 112 und über eine von der ersten Signal- oder Datenverbindung unabhängige, zweite Signal- oder Datenverbindung 512 mit der zweiten Steuereinheit 139 verbunden.

Vorteilhafterweise ist die elektrische Parkbremse (Feststellbremse) bzw. sind die Aktuatoren 508, 509 über nicht näher bezeichnete Signal- oder Datenverbindungen mit der zweiten elektronischen Steuereinheit 139 verbunden, so dass die elektrische Parkbremse bzw. die Aktuatoren 508, 509 von der zweiten elektronischen Steuereinheit 139 angesteuert werden kann/können.

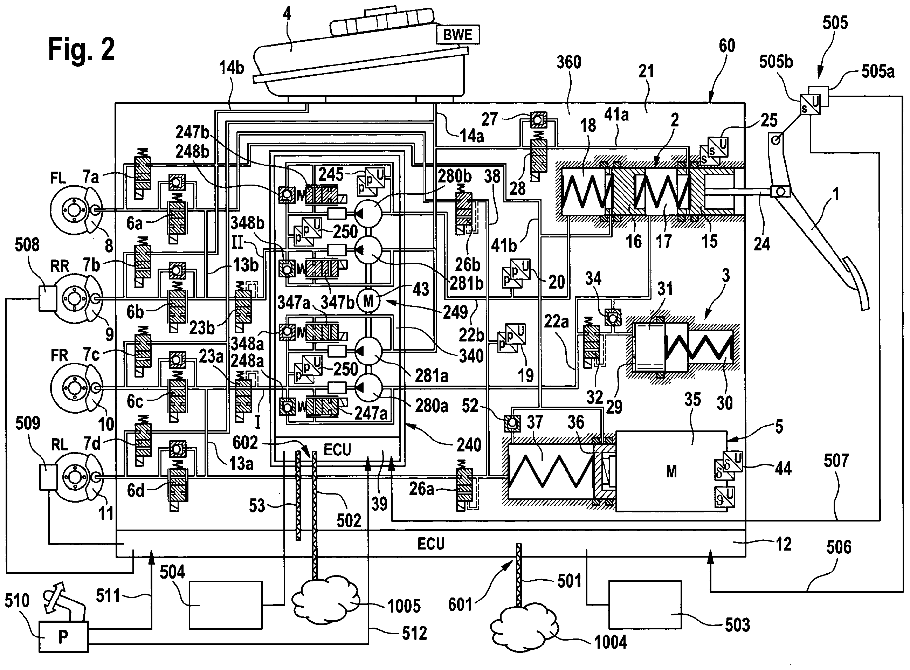

In Fig. 2 ist ein zweites Ausführungsbeispiel einer erfindungsgemäßen Bremsanlage dargestellt. Die Bremsanlage umfasst beispielsgemäß einen mittels eines Betätigungs- bzw. Bremspedals 1 betätigbaren Hauptbremszylinder 2, der mit hydraulisch betätigbaren Radbremsen 8, 9, 10, 11 trennbar verbunden ist, eine mit dem Hauptbremszylinder 2 zusammen wirkende Simulationseinrichtung (Wegsimulator) 3, einen dem Hauptbremszylinder 2 zugeordneten, unter Atmosphärendruck stehenden Druckmittelvorratsbehälter 4, eine erste elektrisch steuerbare Druckquelle 5, welche die Radbremsen mit Bremsdruck versorgen kann bzw. versorgt, eine zweite elektrisch steuerbare Druckquelle 249, welche die Radbremsen mit Bremsdruck versorgen kann bzw. versorgt, eine erste elektronische Steuer- und Regeleinheit 12 zur Ansteuerung der ersten Druckquelle 5 und eine zweite elektronische Steuer- und Regeleinheit 39 zur Ansteuerung der zweiten Druckquelle 249.

Das Bremspedal 1 ist mit einer redundanten Bremsbetätigungssensorvorrichtung 505 versehen, deren einer Bremsbetätigungssensor 505a über Datenleitung 506 mit der ersten elektronischen Steuer- und Regeleinheit 12 und deren andrer Bremsbetätigungssensor 505b über Datenleitung 507 mit der zweiten elektronischen Steuer- und Regeleinheit 39 verbunden ist.

Zum Austausch von Informationen und/oder Anforderungen untereinander sind die elektronischen Steuer- und Regeleinheiten 12 und 39 über eine Kommunikationsverbindung 53 bzw. einen dritten Datenbus miteinander verbunden.

Die erste elektronische Steuer- und Regeleinheit 12 wird von einer ersten elektrischen Energiequelle 503 und die zweite elektronische Steuer- und Regeleinheit 39 wird von einer zweiten elektrischen Energiequelle 504 versorgt.

Die Bremsanlage ist über eine erste Schnittstelle 601 an der ersten elektronischen Steuer- und Regeleinheit 12 mit einem ersten Datenbus 501, und darüber mit einer Anzahl 1004 von Steuergeräten, welche ein (erstes) Umfeldsteuergerät mit Autopilot-Funktion umfasst, verbunden. Die zweite elektronische Steuer- und Regeleinheit 39 weist eine von der ersten unabhängige, zweite Schnittstelle 602 auf. Über die zweite Schnittstelle 602 ist die Bremsanlage mit einem zweiten Datenbus 502, und darüber mit einer Anzahl 1005 von Steuergeräten verbunden.

Die Anzahl 1005 von Steuergeräten umfasst beispielsgemäß das erste Umfeldsteuergerät mit Autopilot-Funktion, wobei die erste Schnittstelle 601 bzw. der erste Datenbus 501 mit einer ersten Schnittstelle des ersten Umfeldsteuergeräts und die zweite Schnittstelle 602 bzw. der zweite Datenbus 502 mit einer zweiten Schnittstelle des ersten Umfeldsteuergeräts verbunden ist.

Gemäß einem anderen Ausführungsbeispiel umfasst die Anzahl 1005 von Steuergeräten ein zweites Umfeldsteuergerät mit Autopilot-Funktion, so dass die erste Schnittstelle 601 bzw. der erste Datenbus 501 mit einer Schnittstelle des ersten Umfeldsteuergeräts und die zweite Schnittstelle 602 bzw. der zweite Datenbus 502 mit einer Schnittstelle des zweiten Umfeldsteuergeräts verbunden ist.

In beiden Fällen ist jede der Steuereinheiten 12, 39 separat über eine Schnittstelle bzw. Kommunikationsleitung mit einem "Autopiloten" bzw. einem Controller-Netzwerk verbunden.

Das erste Umfeldsteuergerät bzw. ggf. das zweite Umfeldsteuergerät kann jeweils auch durch eine Gruppe von Steuergeräten gebildet werden, welche zusammen bzw. gemeinschaftlich die "Autopilot-Funktion" darstellen, d.h. eine fremdangesteuerte Bremsung anfordern können.

Beispielsgemäß sind der Hauptbremszylinder 2, die Simulationseinrichtung 3 und die erste elektrisch steuerbare Druckquelle 5 in einer ersten hydraulischen Steuereinheit (HCU) 360 angeordnet. Die zweite elektrisch steuerbare Druckquelle 249 ist in einer zweiten hydraulischen Steuereinheit (HCU) 260 angeordnet. Die hydraulischen Komponenten der Bremsanlage sind also auf eine erste hydraulische Steuereinheit 360 und eine zweite hydraulische Steuereinheit 340 aufgeteilt, welche, wie im Folgenden noch genauer erläutert wird, hydraulisch miteinander verbunden sind und zusammen eine hydraulische Steuervorrichtung 300 der Bremsanlage darstellen.

Dabei bilden die erste hydraulische Steuereinheit 360 und die erste elektronische Steuer- und Regeleinheit 12 ein erstes elektrohydraulisches Modul 60 sowie die zweite hydraulische Steuereinheit 340 und die zweite elektronische Steuer- und Regeleinheit 39 ein zweites elektrohydraulisches Modul 240.

Der Hauptbremszylinder 2 weist in einem Gehäuse 21 zwei hintereinander angeordnete Kolben 15, 16 auf, die hydraulische Druckräume 17, 18 begrenzen. Die Druckräume 17, 18 stehen einerseits über in den Kolben 15, 16 ausgebildete radiale Bohrungen sowie entsprechende Druckausgleichsleitungen 41a, 41b mit dem Druckmittelvorratsbehälter 4 (über die Rücklaufleitungen 14a, 14b) in Verbindung, wobei diese durch eine Relativbewegung der Kolben 17, 18 im Gehäuse 21 absperrbar sind, und andererseits über hydraulische Leitungen 22a, 22b (und die zweite Druckquelle 249) mit sogenannten Bremskreisversorgungsleitungen 13a, 13b in Verbindung. Dabei ist in der Druckausgleichsleitung 41a eine Parallelschaltung eines stromlos offenen Diagnoseventils 28 mit einem zum Druckmittelvorratsbehälter 4 hin schließenden Rückschlagventil 27 enthalten. Die Druckräume 17, 18 nehmen nicht näher bezeichnete Rückstellfedern auf, die die Kolben 15, 16 bei unbetätigtem Hauptbremszylinder 2 in einer Ausgangslage positionieren. Eine Kolbenstange 24 koppelt die Schwenkbewegung des Bremspedals 1 infolge einer Pedalbetätigung mit der Translationsbewegung des ersten (Hauptzylinder-)Kolbens 15. Dadurch ist das entsprechende Kolbenwegsignal ein Maß für den Bremspedalbetätigungswinkel. Es repräsentiert einen Bremswunsch des Fahrers. Der Betätigungsweg des Kolbens 15 wird daher beispielsgemäß von einem vorzugsweise redundant ausgeführten Wegsensor 25 erfasst, welcher auch als erster oder zweiter Bremsbetätigungssensor (d.h. anstelle eines Sensors 505a oder 505b) verwendet werden kann oder als dritter Bremsbetätigungssensor für eine dritte vorhandene elektronische Steuereinheit verwendet werden kann.

Ein an den Leitungsabschnitt 22b angeschlossener Drucksensor 20 erfasst den im Druckraum 18 durch ein Verschieben des zweiten Kolbens 16 aufgebauten Druck. Drucksensor 20 kann als erster oder zweiter Bremsbetätigungssensor verwendet werden (d.h. anstelle eines Sensors 505a oder 505b) oder als dritter Bremsbetätigungssensor für eine dritte vorhandene elektronische Steuereinheit.

In der hydraulischen Verbindung zwischen einem Druckraum 17, 18 und der zugehörigen Bremskreisversorgungsleitung 13a, 13b ist je ein Trennventil 23a, 23b angeordnet, welches als je ein elektrisch betätigbares, vorzugsweise stromlos offenes, 2/2-Wegeventil ausgebildet ist. Durch die Trennventile 23a, 23b kann die hydraulische Verbindung zwischen den Druckräumen 17, 18 und den Bremskreisversorgungsleitungen 13a, 13b abgesperrt werden.

Wegsimulator 3 ist hydraulisch an den Hauptbremszylinder 2 angekoppelt und umfasst beispielsgemäß eine Simulatorkammer 29, eine Simulatorfederkammer 30 sowie einen die beiden Kammern 29, 30 voneinander trennenden Simulatorkolben 31. Simulatorkolben 31 stützt sich durch ein in Simulatorfederkammer 30 angeordnetes elastisches Element (z.B. eine Feder), welches vorteilhafterweise vorgespannt ist, am Gehäuse 21 ab. Die Simulatorkammer 29 ist mittels eines elektrisch betätigbaren Simulatorfreigabeventils 32 mit dem ersten Druckraum 17 des Tandemhauptbremszylinders 2 verbindbar. Bei Vorgabe einer Pedalkraft und aktiviertem Simulatorfreigabeventil 32 strömt Druckmittel vom Hauptbremszylinder-Druckraum 17 in die Simulatorkammer 29. Ein hydraulisch antiparallel zum Simulatorfreigabeventil 32 angeordnetes Rückschlagventil 34 ermöglicht unabhängig vom Schaltzustand des Simulatorfreigabeventils 32 ein weitgehend ungehindertes Zurückströmen des Druckmittels von der Simulatorkammer 29 zum Hauptbremszylinder-Druckraum 17.

Die erste elektrisch steuerbare Druckquelle 5 ist beispielsgemäß als eine hydraulische Zylinder-Kolben-Anordnung bzw. ein einkreisiger elektrohydraulischer Aktuator ausgebildet, dessen Kolben 36 von einem schematisch angedeuteten Elektromotor 35 unter Zwischenschaltung eines ebenfalls schematisch dargestellten Rotations-Translations-Getriebes betätigbar ist. Ein der Erfassung der Rotorlage des Elektromotors 35 dienender, lediglich schematisch angedeuteter Rotorlagesensor ist mit dem Bezugszeichen 44 bezeichnet. Zusätzlich kann auch ein Temperatursensor zum Sensieren der Temperatur der Motorwicklung verwendet werden. Der Kolben 36 begrenzt einen Druckraum 37.

Der durch die Kraftwirkung des Kolbens 36 auf das im Druckraum 37 eingeschlossene Druckmittel erzeugte Aktuatordruck wird in eine Systemdruckleitung 38 eingespeist. Zum Erfassen des in der Systemdruckleitung 38 herrschenden Druckes ist ein vorzugsweise redundant ausgeführter Drucksensor 19 vorgesehen. In einer "Brake-by-Wire"-Betriebsart der Bremsanlage wird die Systemdruckleitung 38 über je ein Zuschaltventil 26a, 26b mit den Bremskreisversorgungsleitungen 13a, 13b verbunden. Auf diesem Weg erfolgt bei einer Normalbremsung ein Radbremsdruckauf- und -abbau für alle Radbremsen 8, 9, 10, 11. Beim Druckabbau strömt dabei das vorher aus dem Druckraum 37 des Aktuators 5 in die Radbremsen 8, 9, 10, 11 verschobene Druckmittel auf dem gleichen Wege wieder in den Druckraum 37 des Aktuators 5 zurück. Dagegen strömt bei einer Bremsung mit radindividuell unterschiedlich, mit Hilfe von Einlass- und Auslassventilen 6a-6d, 7a-7d geregelten Radbremsdrücken der über die Auslassventile 7a-7d abgelassene Druckmittelanteil in den Druckmittelvorratsbehälter 4. Ein Nachsaugen von Druckmittel in den Druckraum 37 ist durch ein Zurückfahren des Kolbens 36 bei geschlossenen Zuschaltventilen 26a, 26b möglich, indem Druckmittel aus dem Behälter 4 über ein in Strömungsrichtung zur ersten Druckquelle 5 öffnendes Rückschlagventil 52 in den Druckraum 37 strömen kann.

Weiterhin umfasst die erste hydraulische Steuereinheit 360 eine nicht näher bezeichnete Druckmodulationseinrichtung, die beispielsgemäß je Radbremse 8, 9, 10, 11 ein Einlassventil 6a-6d und ein Auslassventil 7a-7d aufweist, die paarweise über Mittenanschlüsse hydraulisch zusammengeschaltet und an die Radbremsen 8, 9, 10, 11 angeschlossen sind.

Die Eingangsanschlüsse der Einlassventile 6a-6d werden mittels den Bremskreisversorgungsleitungen 13a, 13b mit Drücken versorgt, die in der "Brake-by-Wire"-Betriebsart aus einem Systemdruck abgeleitet werden, der in der an den Druckraum 37 der ersten Druckquelle 5 angeschlossenen Systemdruckleitung 38 vorliegt. Den Einlassventilen 6a-6d ist jeweils ein zu den Bremskreisversorgungsleitungen 13a, 13b hin öffnendes, nicht näher bezeichnetes Rückschlagventil parallel geschaltet. In einer unverstärkten Rückfallbetriebsart werden die Bremskreisversorgungsleitungen 13a, 13b über die hydraulischen Leitungen 22a, 22b mit den Drücken der Druckräume 17, 18 des Hauptbremszylinders 2 beaufschlagt. Die Ausgangsanschlüsse der Auslassventile 7c, 7d; 7a, 7b sind paarweise über die Rücklaufleitungen 14a, 14b mit dem Druckmittelvorratsbehälter 4 verbunden.

Beispielsgemäß sind die Radbremsen 8 bzw. 9 des Bremskreises II (Bremskreisversorgungsleitungen 13b) dem linken Vorderrad FL bzw. dem rechten Hinterrad RR und die Radbremsen 10 bzw. 11 des Bremskreises I (Bremskreisversorgungsleitungen 13a) dem rechten Vorderrad FR bzw. dem linken Hinterrad RL zugeordnet. Andere Kreisaufteilungen sind ebenso denkbar.

Die genannten Komponenten 2, 3, 5, 6a-6d, 7a-7d, 12, 19, 20, 22a, 22b, 23a, 23b, 25, 26a, 26b, 27, 28, 32, 34, 38, 41a, 41b, 44, 46, 52 sind beispielsgemäß in einem elektrohydraulischen Modul 60 zusammen gefasst. Der Ansteuerung der elektrisch betätigbaren Komponenten der ersten hydraulischen Steuereinheit 360 des Moduls 60, insbesondere der Trennventile 23a, 23b, der Zuschaltventile 26a, 26b, der Ventile 28, 32 und des Elektromotors 35 der ersten Druckquelle 5, dient die erste elektronische Steuer- und Regeleinheit 12. Steuer- und Regeleinheit 12 ist auch für die Ansteuerung der Druckmodulationseinrichtung (Einlass- und Auslassventile 6a-6d, 7a-7d) ausgelegt. Die Signale der Sensoren 19, 20, 25 und 44 werden ebenso in der ersten elektronischen Steuer- und Regeleinheit 12 verarbeitet.

Das zweite elektrohydraulische Modul 240 umfasst die zweite hydraulische Steuereinheit 340 mit der zweiten elektrisch steuerbaren Druckquelle 249 und die zweite elektronische Steuer- und Regeleinheit 39.

Druckquelle 249 ist beispielsgemäß als eine von einem Elektromotor 43 angetriebene, vierkreisige Pumpe, z.B. eine 4-Kolbenpumpe, ausgebildet. Dabei ist für jeden Bremskreis I, II ein Pumpenkreis 280a, 280b zwischen dem zugehörigen Hauptbremszylinder-Druckraum 17, 18 und dem entsprechenden Trennventil 23a, 23b angeordnet. Ein weiterer Pumpenkreis 281a, 281b ist zwischen dem Druckmittelvorratsbehälter 4 und dem entsprechenden Trennventil 23a, 23b angeordnet. Die Saugseiten der beiden Pumpenkreise 280a, 280b sind je direkt an den Druckraum 17, 18 des Hauptbremszylinders angeschlossen (über die Leitungen 22a bzw. 22b), die Saugseiten der beiden Pumpenkreise 281a, 281b sind über eine gemeinsame Verbindungsleitung direkt an den Druckmittelvorratsbehälter 4 angeschlossen (beispielsgemäß über die Rücklaufleitung 14a) . Die Druckseiten der Pumpenkreise 280a, 281a; 280b, 281b sind jeweils bremskreisweise (I, II) gemeinsam mit dem Eingangsanschluss des zugehörigen Trennventils 23a, 23b verbunden.

Eine zweite Druckquelle mit einer von einem Elektromotor 43 angetriebene, sechskreisigen Pumpe ist ebenso denkbar. Ebenso ist es möglich, dass die zweite Druckquelle als zweikreisige Pumpe ausgebildet ist. Die zwei Pumpenkreise können dann zwischen dem zugehörigen Hauptbremszylinder-Druckraum und dem entsprechenden Trennventil angeordnet sein (entsprechend den Pumpenkreisen 280a, 280b). Alternativ können die zwei Pumpenkreise zwischen dem Druckmittelvorratsbehälter und dem entsprechenden Trennventil angeordnet sein. Andere Arten von Druckquelle sind ebenfalls denkbar, wobei vorteilhafterweise für jeden Bremskreis zumindest ein eigener Druckkreis vorgesehen ist.

Die zweite hydraulische Steuereinheit 340 umfasst beispielsgemäß je Pumpenkreis 280a, 280b ein der Pumpe parallel geschaltetes, vorteilhafterweise analog ansteuerbares, Regelventil 247a, 247b, welches insbesondere stromlos offen ausgeführt ist, und ein dem Regelventil 247a, 247b parallel geschaltetes, in Richtung der Radbremsen 8, 9, 10, 11 öffnendes Rückschlagventil 248a, 248b. Je Pumpenkreis 281a, 281b ist der Pumpe ein, vorteilhafterweise analog ansteuerbares, Überströmventil 248a, 248b, welches insbesondere stromlos geschlossen ausgeführt ist, parallel geschaltet, wobei dem Überströmventil 248a, 248b jeweils ein in Richtung der Radbremsen 8, 9, 10, 11 öffnendes Rückschlagventil 348a, 348b parallel geschaltet ist. Über die Ventile 247a, 247b, 248a, 248b ist ein Volumenstrom von der Pumpendruckseite zur Pumpensaugseite einstellbar. Mittels der Regelventile 247a, 247b, die mit dem Hauptbremszylinder 2 verbunden sind, wird der Fahrerdruck (die Pedalkraft) eingestellt, mittels der Überströmventile 248a, 248b wird der Druck in den beiden Bremskreisen I, II unabhängig vom Fahrer eingestellt.

Modul 240 umfasst beispielsgemäß einen an der Saugseite des Pumpenkreises 280b angeordneten Drucksensor 245 sowie je Bremskreis I, II einen an der Druckseite der Pumpenkreise angeordneten Drucksensor 250. Vorteilhafterweise werden die Signale der Drucksensoren 245, 250 der Steuer- und Regeleinheit 39 zugeführt, welche den Elektromotor 43 und die Ventile 247a, 247b, 248a, 248b des Moduls 240 ansteuert.

Im Falle eines Ausfalls der ersten Druckquelle 5 bzw. des ersten Moduls 60 ermöglicht die zweite Druckquelle 249 bzw. das zweite Modul 240 die Bereitstellung bzw. Verstärkung eines Bremssystemdruckes, wodurch die Verfügbarkeit der Bremsanlage verbessert wird.

Da gemäß dem zweiten Ausführungsbeispiel das Modul 240 hydraulisch vor den Trennventilen 23a, 23b angeordnet ist, kann bei Leckage einer der Verbindungsleitungen des Moduls 240 der betroffenen Betätigungskreis (d.h. der Teil des Bremskreises vor dem Trennventil 23a oder 23b mit der Leckage) durch Schließen des zugehörigen Trennventils abgetrennt werden, so dass der Teil der Bremskreises zum Druckaufbau mittels der ersten Druckquelle 5 nicht betroffen ist. Ein weiterer Vorteil der Anordnung vor den Trennventilen bzw. des direkten Anschlusses der Saugseiten der Pumpenkreise an den Hauptbremszylinder-Druckraum bzw. an den Druckmittelvorratsbehälter liegt darin, dass ein erhöhter Pumpenvolumenstrom durch den Entfall einer Saugdrosselung erreicht wird. Grundsätzlich ist eine andere Anordnung des Moduls 240, z.B. zwischen den Trennventilen und den Einlassventilen, ebenso denkbar.

Die beispielsgemäße Bremsanlage weist ferner eine elektrische Parkbremse auf, deren Aktuatoren 508, 509 im gezeigten Beispiel an den Rädern der Hinterachse RR, RL angeordnet sind. Vorteilhafterweise sind die Aktuatoren 508, 509 als integrierte Parkbremse im jeweiligen Bremssattel der Betriebsbremse integriert. Über Bedienschalter 510 kann der Fahrer die elektrische Parkbremse betätigen. Der Parkbremsbedienschalter ist zumindest über eine erste Signal- oder Datenverbindung 511 mit einer der elektronischen Steuer- und Regeleinheiten, beispielsgemäß mit der ersten elektronischen Steuer- und Regeleinheit 12, verbunden und kann optional (in Fig. 2 dargestellt) über eine zweite Signal- oder Datenverbindung 512 mit der anderen (hier der zweiten Steuer- und Regeleinheit 39) verbunden sein. Vorteilhafterweise ist die elektrische Parkbremse bzw. sind die Aktuatoren 508, 509 von der zweiten elektronischen Steuer- und Regeleinheit 39 ansteuerbar bzw. elektrisch betätigbar, so dass eine Bremsunterstützung mittels der Parkbremse bei einer Bremsung mittels der zweiten Druckquelle 248 möglich ist.

Bei den Datenbussen 53, 501, 502 handelt es sich bevorzugt um CAN-Busse oder Flexray-Busse.

Bei den Ausführungsbeispielen der Fig. 1 und 2 weist beispielsgemäß (nicht im Detail dargestellt) die erste elektronische Steuereinheit 112, 12 drei redundante Recheneinheiten auf. Die Ansteuerung der ersten Druckquelle 301, 5 erfolgt dann anhand eines Vergleichs der Ausgangssignale der drei redundanten Recheneinheiten, wobei vorteilhafterweise eine Mehrheitsentscheidung vorgenommen wird.

Beispielsgemäß weist auch die zweite elektronische Steuereinheit 139, 39 drei redundante Recheneinheiten auf und die Ansteuerung der zweiten Druckquelle 302, 249 erfolgt anhand eines Vergleichs der Ausgangssignale der drei redundanten Recheneinheiten, wobei insbesondere eine Mehrheitsentscheidung vorgenommen wird. Gemäß nicht dargestellter Ausführungsbeispiele ist eine ausfallgefährdete Komponente oder sind mehrere ausfallgefährdete Komponenten vorteilhafterweise dreifach Ausgeführt. Eine dreifache Ausführung dieser Komponente(n) hätte den Vorteil, dass die besonders vorteilhafte Dreifachredundanz genutzt werden kann.

Beispielsweise kann durch den Vergleich der Rechenergebnisse von drei elektronischen Steuereinheiten ein fehlerhaftes Ergebnis detektiert werden.

Beispielsgemäß umfasst die Bremsanlage eine dritte elektronische Steuereinheit, welche die erste und/oder die zweite Druckquelle ansteuern kann. Vorteilhafterweise weist die dritte elektronische Steuereinheit eine dritte Schnittstelle zur Anforderung einer fremdangesteuerten Bremsung auf.

Beispielsgemäß umfasst die Bremsanlage eine dritte elektrisch steuerbare Druckquelle. Diese kann von der ersten oder der zweiten oder der dritten elektronischen Steuereinheit angesteuert werden.

Beispielsgemäß umfasst die Bremsanlage eine dritte elektrische Energiequelle, welche die dritte elektronische Steuereinheit und/oder die dritte Druckquelle versorgt.

## Patentansprüche

1. Bremsanlage für Kraftfahrzeuge, die in einer "Brake-by-wire"-Betriebsart sowohl von einem Fahrer als auch unabhängig vom Fahrer ansteuerbar ist, mit
• einem Bremspedal (1),
• mindestens zwei hydraulisch betätigbaren Radbremsen (8, 9, 10, 11),
• einem ersten und einem zweiten Bremsbetätigungssensor (505a, 505b),
• einer ersten elektrisch steuerbaren Druckquelle (301, 5), mittels welcher die Radbremsen betätigbar sind,
• einer ersten elektronischen Steuereinheit (112, 12), welche mit dem ersten Bremsbetätigungssensor (505a) verbunden ist und die erste Druckquelle (301, 5) ansteuert,
• einer zweiten elektrisch steuerbaren Druckquelle (302, 249), mittels welcher die Radbremsen betätigbar sind,
• einer zweiten elektronischen Steuereinheit (139, 39), welche mit dem zweiten Bremsbetätigungssensor (505b) verbunden ist und die zweite Druckquelle (302, 249) ansteuert,
• einer hydraulischen Steuervorrichtung (300), und
• einer Datenverbindung (53), insbesondere einem dritten Datenbus, zwischen der ersten elektronischen Steuereinheit (112, 12) und der zweiten elektronischen Steuereinheit (139, 39),
**dadurch gekennzeichnet, dass** die erste elektronische Steuereinheit (112, 12) eine erste Schnittstelle (601) zur Anforderung einer fremdangesteuerten Bremsung aufweist, und dass die zweite elektronische Steuereinheit (139, 39) eine zweite Schnittstelle (602) zur Anforderung einer fremdangesteuerten Bremsung aufweist, wobei die erste Schnittstelle und die zweite Schnittstelle nicht miteinander verbunden sind, wobei die erste Schnittstelle (601) über einen ersten Datenbus (501) mit einer ersten Schnittstelle eines ersten Umfeldsteuergeräts mit Autopilot-Funktion verbunden ist, und wobei die zweite Schnittstelle (602) über einen zweiten Datenbus (502)
• mit einer zweiten Schnittstelle des ersten Umfeldsteuergeräts mit Autopilot-Funktion oder
• mit einer ersten Schnittstelle eines zweiten Umfeldsteuergeräts mit Autopilot-Funktion
verbunden ist.

2. Bremsanlage nach Anspruch 1, **dadurch gekennzeichnet, dass** der erste und der zweite Bremsbetätigungssensor (505a, 505b) als ein redundanter Bremsbetätigungssensor (505), insbesondere Betätigungswegsensor, ausgeführt und in einer Baueinheit integriert sind.

3. Bremsanlage nach einem der vorhergehenden Ansprüche, **dadurch gekennzeichnet, dass** die erste elektronische Steuereinheit (112, 12) und die erste Druckquelle (301, 5) mit einer ersten elektrischen Energiequelle (503), insbesondere einer Batterie, verbunden sind und dass die zweite elektronische Steuereinheit (139, 39) und die zweite Druckquelle (302, 249) mit einer zweiten elektrischen Energiequelle (504), insbesondere einer Batterie, verbunden sind, wobei die erste Energiequelle und die zweite Energiequelle unabhängig voneinander sind.

4. Bremsanlage nach einem der vorhergehenden Ansprüche, **dadurch gekennzeichnet, dass** die hydraulische Steuervorrichtung (300) mindestens ein erstes Magnetventil (26, 26a, 26b) zwischen Radbremsen und erster Druckquelle sowie ein zweites Magnetventil (23, 23a, 23b) zwischen Radbremsen und zweiter Druckquelle umfasst.

5. Bremsanlage nach einem der vorhergehenden Ansprüche, **dadurch gekennzeichnet, dass** die hydraulische Steuervorrichtung (300) in eine erste hydraulische Steuereinheit (360) und eine zweite hydraulische Steuereinheit (340) aufgeteilt ist, wobei die ersten Druckquelle (5) in der ersten hydraulischen Steuereinheit (360) und die zweite Druckquelle (249) in der zweiten hydraulischen Steuereinheit (340) angeordnet ist.

6. Bremsanlage nach Anspruch 5, wenn rückbezogen auf Anspruch 4, **dadurch gekennzeichnet, dass** das mindestens eine erste Magnetventil (26a, 26b) sowie das mindestens eine zweite Magnetventil (23a, 23b) in der ersten hydraulischen Steuereinheit (360) angeordnet sind.

7. Bremsanlage nach einem der vorhergehenden Ansprüche, **dadurch gekennzeichnet, dass** diese eine elektrisch betätigbare Feststellbremse (508, 509) umfasst, welche mittels der zweiten elektronischen Steuereinheit (139, 39) elektrisch steuerbar ist.

8. Bremsanlage nach Anspruch 7, **dadurch gekennzeichnet, dass** diese einen Feststellbremsbetätigungsschalter (510) umfasst, welcher über eine erste Signal- oder Datenverbindung (511) mit der ersten elektronischen Steuereinheit und über eine zweite Signal- oder Datenverbindung (512) mit der zweiten elektronischen Steuereinheit verbunden ist.

9. Bremsanlage nach einem der vorhergehenden Ansprüche, **dadurch gekennzeichnet, dass** die erste elektronische Steuereinheit (112, 12) drei redundante Recheneinheiten aufweist, und dass die Ansteuerung der ersten Druckquelle (301, 5) anhand eines Vergleichs der Ausgangssignale der drei redundanten Recheneinheiten erfolgt, wobei insbesondere eine Mehrheitsentscheidung vorgenommen wird.

10. Bremsanlage nach einem der vorhergehenden Ansprüche, **dadurch gekennzeichnet, dass** die zweite elektronische Steuereinheit (139, 39) drei redundante Recheneinheiten aufweist, und dass die Ansteuerung der zweiten Druckquelle (302, 249) anhand eines Vergleichs der Ausgangssignale der drei redundanten Recheneinheiten erfolgt, wobei insbesondere eine Mehrheitsentscheidung vorgenommen wird.

## Claims

1. Brake system for motor vehicles, which can be actuated in a "brake-by-wire" operating mode both by a driver and also independently of the driver, with
• a brake pedal (1),
• at least two hydraulically operated wheel brakes (8, 9, 10, 11),
• a first and a second brake operation sensor (505a, 505b),
• a first electrically controllable pressure source (301, 5), by means of which the wheel brakes can be operated,
• a first electronic control unit (112, 12), which is connected to the first brake operation sensor and activates the first pressure source (301, 5),
• a second electrically controllable pressure source (302, 249), by means of which the wheel brakes can be operated,
• a second electronic control unit (139, 39), which is connected to the second brake operation sensor (505b) and actuates the second pressure source (302, 249),
• a hydraulic control device (300), and
• a data connection (53), in particular a third data bus, between the first electronic control unit (112, 12) and the second electronic control unit (139, 39),
**characterized in that** the first electronic control unit (112, 12) comprises a first interface (601) for requesting externally actuated braking, and that the second electronic control unit (139, 39) comprises a second interface (602) for requesting externally actuated braking, wherein the first interface and the second interface are not connected to each other, wherein the first interface (601) is connected by means of a first data bus (501) to a first interface of a first environment control unit having autopilot function, and wherein the second interface (602) is connected by means of a second data bus (502)
• to a second interface of the first environment control unit having autopilot function or
• to a first interface of a second environment control unit having autopilot function.

2. Brake system according to Claim 1, **characterized in that** the first and the second brake operation sensors (505a, 505b) are implemented as a redundant brake operation sensor (505), in particular an operation travel sensor, and are integrated within a unit.

3. Brake system according to either of the preceding claims, **characterized in that** the first electronic control unit (112, 12) and the first pressure source (301, 5) are connected to a first electrical energy source (503), in particular a battery, and that the second electronic control unit (139, 39) and the second pressure source (302, 249) are connected to a second electrical energy source (504), in particular a battery, wherein the first energy source and the second energy source are mutually independent.

4. Brake system according to any one of the preceding claims, **characterized in that** the hydraulic control device (300) comprises at least one first solenoid valve (26, 26a, 26b) between the wheel brakes and the first pressure source as well as a second solenoid valve (23, 23a, 23b) between the wheel brakes and the second pressure source.

5. Brake system according to any one of the preceding claims, **characterized in that,** the hydraulic control device (300) is divided into a first hydraulic control unit (360) and a second hydraulic control unit (340), wherein the first pressure source (5) is disposed in the first hydraulic control unit (360) and the second pressure source (249) is disposed in the second hydraulic control unit (340).

6. Brake system according to Claim 5, when referring back to Claim 4, **characterized in that** the at least one first solenoid valve (26a, 26b) as well as the at least one second solenoid valve (23a, 23b) are disposed in the first hydraulic control unit (360).

7. Brake system according to any one of the preceding claims, **characterized in that** said brake system comprises an electrically operated parking brake (508, 509), which can be electrically controlled by means of the second electronic control unit (139, 39).

8. Brake system according to Claim 7, **characterized in that** said brake system comprises a parking brake operating switch (510), which is connected by means of a first signal or data connection (511) to the first electronic control unit and by means of a second signal or data connection (512) to the second electronic control unit.

9. Brake system according to any one of the preceding claims, **characterized in that** the first electronic control unit (112, 12) comprises three redundant computation units, and that the actuation of the first pressure source (301, 5) is carried out using a comparison of the output signals of the three redundant computation units, wherein in particular a majority decision is carried out.

10. Brake system according to any one of the preceding claims, **characterized in that** the second electronic control unit (139, 39) comprises three redundant computation units, and that the actuation of the second pressure source (302, 249) is carried out using a comparison of the output signals of the three redundant computation units, wherein in particular a majority decision is carried out.

## Revendications

1. Système de freinage pour véhicules automobiles, qui peut être commandé en mode "Brake-by-wire" aussi bien par un conducteur qu'indépendamment du conducteur, avec
• une pédale de frein (1),
• au moins deux freins de roue actionnables par commande hydraulique (8, 9, 10, 11),
• un premier et un deuxième détecteurs d'actionnement de frein (505a, 505b),
• une première source de pression pouvant être commandée électriquement (301, 5), au moyen de laquelle les freins de roue peuvent être actionnés,
• une première unité de commande électronique (112, 12), qui est reliée au premier détecteur d'actionnement de frein (505a) et qui commande la première source de pression (301, 5),
• une deuxième source de pression pouvant être commandée électriquement (302, 249), au moyen de laquelle les freins de roue peuvent être actionnés,
• une deuxième unité de commande électronique (139, 39), qui est reliée au deuxième détecteur d'actionnement de frein (505b) et qui commande la deuxième source de pression (302, 249),
• un dispositif de commande hydraulique (300), et
• une liaison de données (53), en particulier un troisième bus de données, entre la première unité de commande électronique (112, 12) et la deuxième unité de commande électronique (139, 39),
**caractérisé en ce que** la première unité de commande électronique (112, 12) présente une première interface (601) pour demander un freinage à commande externe, et **en ce que** la deuxième unité de commande électronique (139, 39) présente une deuxième interface (602) pour demander un freinage à commande externe, dans lequel la première interface et la deuxième interface ne sont pas reliées l'une à l'autre, dans lequel la première interface (601) est reliée par un premier bus de données (501) à une première interface d'un premier appareil de commande d'environnement avec une fonction d'autopilotage, et dans lequel la deuxième interface (602) est reliée par un deuxième bus de données (502)
• à une deuxième interface du premier appareil de commande d'environnement avec fonction d'autopilotage ou
• à une première interface d'un deuxième appareil de commande d'environnement avec fonction d'autopilotage.

2. Système de freinage selon la revendication 1, **caractérisé en ce que** le premier et le deuxième détecteurs d'actionnement de frein (505a, 505b) sont réalisés sous la forme d'un détecteur d'actionnement de frein redondant (505), en particulier un détecteur de course d'actionnement, et sont intégrés dans une unité de construction.

3. Système de freinage selon l'une quelconque des revendications précédentes, **caractérisé en ce que** la première unité de commande électronique (112, 12) et la première source de pression (301, 5) sont reliées à une première source d'énergie électrique (503), en particulier à une batterie, et **en ce que** la deuxième unité de commande électronique (139, 39) et la deuxième source de pression (302, 249) sont reliées à une deuxième source d'énergie électrique (504), en particulier à une batterie, dans lequel la première source d'énergie et la deuxième source d'énergie sont indépendantes l'une de l'autre.

4. Système de freinage selon l'une quelconque des revendications précédentes, **caractérisé en ce que** le dispositif de commande hydraulique (300) comprend au moins une première soupape magnétique (26, 26a, 26b) entre des freins de roue et la première source de pression ainsi qu'une deuxième soupape magnétique (23, 23a, 23b) entre des freins de roue et la deuxième source de pression.

5. Système de freinage selon l'une quelconque des revendications précédentes, **caractérisé en ce que** le dispositif de commande hydraulique (300) est divisé en une première unité de commande hydraulique (360) et une deuxième unité de commande hydraulique (340), dans lequel la première source de pression (5) est disposée dans la première unité de commande hydraulique (360) et la deuxième source de pression (249) est disposée dans la deuxième unité de commande hydraulique (340).

6. Système de freinage selon la revendication 5, lorsqu'elle se rapporte à la revendication 4, **caractérisé en ce que** ladite au moins une première soupape magnétique (26a, 26b) ainsi que ladite au moins une deuxième soupape magnétique (23a, 23b) sont disposées dans la première unité de commande hydraulique (360).

7. Système de freinage selon l'une quelconque des revendications précédentes, **caractérisé en ce qu'**il comprend un frein de stationnement actionnable électriquement (508, 509), qui peut être commandé électriquement au moyen de la deuxième unité de commande électronique (139, 39).

8. Système de freinage selon la revendication 7, **caractérisé en ce qu'**il comprend un interrupteur d'actionnement de frein de stationnement (510), qui est relié à la première unité de commande électronique par une première liaison de signaux ou de données (511) et à la deuxième unité de commande électronique par une deuxième liaison de signaux ou de données (512).

9. Système de freinage selon l'une quelconque des revendications précédentes, **caractérisé en ce que** la première unité de commande électronique (112, 12) présente trois unités de calcul redondantes, et **en ce que** la commande de la première source de pression (301, 5) est effectuée à l'aide d'une comparaison des signaux de sortie des trois unités de calcul redondantes, dans lequel on prend en particulier une décision à la majorité.

10. Système de freinage selon l'une quelconque des revendications précédentes, **caractérisé en ce que** la deuxième unité de commande électronique (139, 39) présente trois unités de calcul redondantes, et **en ce que** la commande de la deuxième source de pression (302, 249) est effectuée à l'aide d'une comparaison des signaux de sortie des trois unités de calcul redondantes, dans lequel on prend en particulier une décision à la majorité.
